# EUROPEAN PATENT SPECIFICATION

(11) **EP 0 514 215 B1**
(45) Date of publication and mention of the grant of the patent: **07.02.1996**
(21) Application number: 92304445.7
(22) Date of filing: 15.05.1992
(51) Int. Cl.: G21C 3/326

(54) **Part length rod placement in boiling water reactor fuel assembly for reactivity control**
Teillängenstabanordnung in Siedewasserreaktorbrennstabbündel zur Reaktivitätssteuerung
Emplacement des barreaux à longeurs partielles dans un assemblage de combustible du type réacteur à eau bouillante pour contrôler la réactivité

(30) Priority: 17.05.1991 US 702213
(43) Date of publication of application: 19.11.1992
(73) Proprietor: GENERAL ELECTRIC COMPANY, Schenectady, NY 12345 (US)
(72) Inventor: Matzner, Bruce, San Jose, California 95125 (US); Reese, Anthony Paul, San Jose, California 95136 (US); Wolters, Richard Arthur, Jr., San Jose, California 95123 (US)
(74) Representative: Lupton, Frederick

(56) References cited:
- EP-A- 0 406 637
- EP-A- 0 419 228
- DE-A- 3 828 616
- DE-A- 4 122 209

## Description

This invention relates to fuel bundles for boiling water nuclear reactors of the kind defined in the preamble of claim 1 and disclosed in EP-A-336.203. More specifically, the invention relates to a fuel bundle containing a matrix of fuel rods in which at least one of the fuel rods is a so-called part length fuel rod. The part length rod(s) commences at the lower tie plate and extends and terminates in the two phase region of the fuel bundle below the upper tie plate. The improvement herein relates to such part length rods being preferably positioned next to large water rod(s) to provide a fuel bundle having a dramatically improved hot to cold reactivity swing after the first fuel cycle or "burn". Reduced pressure drop in the two phase region of the fuel bundle is also present in the disclosed design.

### BACKGROUND OF THE INVENTION

In European Patent Application Publication EP-A-336,203 the concept of partial length rods is disclosed. This concept may best be understood by first understanding the construction of a conventional fuel bundle with conventional fuel rods and thereafter setting forth in summary format the part length rod invention of the above referenced patent.

A conventional boiling water fuel bundle includes a lower tie plate for supporting a matrix of vertical upstanding sealed fuel rods at their lower end and an upper tie plate for holding the same matrix of vertical upstanding sealed fuel rods at their upper end. The lower tie plate permits the inflow of liquid moderator (water) around the fuel rods, the upper tie plate permits the outflow of liquid moderator (water) and generated vapor moderator (steam) at the upper end of the fuel bundle. A channel surrounds the lower tie plate, surrounds the upper tie plate, and defines a confined flow path for the moderator between the upper and lower tie plates about the matrix of upstanding fuel rods. Fluid flow is thus confined between the upper and lower tie plates and isolated from surrounding liquid moderator in the so-called core by pass area immediately adjoined to the fuel channel on the outside of the fuel channel.

During operation of the fuel bundle in a reactor core of a boiling water nuclear reactor, the fuel bundle can be dynamically described as having two regions of operation. These regions include a lower single phase region containing liquid moderator (water) and an upper two phase region containing liquid moderator (water) intermixed with increasing fractions of vapor moderator (steam).

In a boiling water nuclear reactor, the moderator serves two purposes. First, the moderator moderates fast neutrons generated by the reaction into slow or thermal neutrons necessary to continue the reaction.

Secondly, the dense water moderator acquires increasing fractions of saturated steam as the moderator passes upwardly through the fuel bundle. Upon discharge of the moderator from the fuel bundle, energy is extracted from the saturated steam by passing the steam through an engine, such as a steam turbine.

Having set forth the conventional construction and operation of a boiling water nuclear reactor fuel bundle, the concept of part length rods can now be discussed.

In the reference reference European Application EP-A- 336,203, so-called part length rods were disclosed. In short, an invention is set forth in which a plurality of fuel rods extending from the lower tie plate toward the upper tie plate, the part length rods terminate within the two phase region of the bundle before reaching the upper tie plate. The invention makes the point that at least two of the part length rods are separate from one another so as to define in at least two locations in the bundle spaced apart and separate vents commencing at the top of said partial length rods and extending to the upper tie plate. Specifically, each of the spaced apart vents is immediately adjoined by adjacent full length fuel rods.

Usefulness of the invention is set forth. Specifically, an improved fuel to moderator ratio is created in the upper two phase region of the fuel bundle. More importantly, pressure drop reduction in the upper two phase region of the fuel bundle is set forth. This enables greater stability of the fuel bundle and a reactor core including fuel bundles against thermal-hydraulic and nuclear, thermal-hydraulic instabilities. Additionally, the fuel to moderator ratio is improved, especially in the cold operating state.

Placement of the part length rods within the matrix of the Dix disclosure requires the consideration of the "thermal limits" of the fuel rods. Simply stated, any individual fuel bundle within a boiling water nuclear fuel bundle cannot output more heat than the passing coolant can extract from that particular fuel bundle. Where one portion of a fuel bundle has a large and open void, it has been found that thermal limits can be adversely effected in bundle areas outside of the large and open void.

The explanation for this phenomena is believed to relate to the entrainment of coolant in the out flowing and venting steam in the large and open void. Specifically, as relative large volumes of coolant pass out of the fuel bundle in one portion of the fuel bundle, lesser flows of coolant occur in other portions of the fuel bundle. Where there are lesser flows of coolant, the ability of the coolant to remove heat from the fuel rods is reduced. Consequently, the thermal limit requirements of these portions of the fuel bundle are exceeded. Those having skill in nuclear design will understand this statement to be a generality. Study of these thermal limits can be understood and analyzed more exactly utilizing the concepts of "thermal limits", "maximum linear heat generation rate", and "critical power."

In EP-A-336.203, the preferred location of the part length rods was specified. Specifically, locations for the part length rods were specified to be in the second row in from the channel. The reason for this specification was that it was known that full length fuel rods in this location were subject to critical power limitations. It was therefore specified that the relatively poor thermally performing fuel rods were the desired location for removal and replacement with partial length rods.

DE-A-3,828,616 discloses a fuel bundle for a BWR which also uses part length rods. The present invention is characterized by the features of the characterizing portion of claim 1.

### SUMMARY OF THE INVENTION

In prior art fuel bundles, a problem of optimum fuel bundle reactivity during the in reactor life span of the fuel bundle has been encountered. In order to understand this problem, it is necessary to understand a typical life cycle of a fuel bundle within a reactor core. This typical life span includes various reactivities and core locations of the bundle as the fuel bundle passes through its in core life.

Nuclear reactors are typically refueled at periods of non operation known in the industry as "outages." Such outages are separated by operating "cycles" on the order of 12 to 18 month intervals. That is to say, the reactor is operated continuously for a period of about twelve to eighteen months. Thereafter, the reactor is taken off line, opened, and a portion (usually 1/3 to 1/5) of its fuel bundles replaced. The in reactor life cycle of fuel bundles is typically measured by the number of cycles in the life of the fuel bundle, these cycles being bounded at the beginning and at the end by an outage.

Fuel bundles typically reside within the reactor over a period of three to five cycles. During the initial fuel cycle, the hot and cold reactivity of the fuel bundles is acceptably low; the fuel bundles are usually placed at scattered locations through out the central portion of the cylindrically sectioned reactor core.

During the second cycle and more usually at the beginning of the second cycle (also sometimes referred to as a "burn"), fuel bundles have the highest reactivity of their in reactor life. Such fuel bundles are often placed within a so-called "ring of fire." This ring of fire is peripheral to the cylindrically sectioned core -- but typically located inward from the outside of the core by at least one row of peripheral bundles. The purpose for this type of reactor loading is to enable an even power distribution across the reactor core. In the absence of this "ring of fire" loading profile, reactors would tend to operate with maximum power at the center of the core, tapering to the outside of the core -- and would not enjoy a preferred "flat" power distribution across the reactor core.

Unfortunately, fuel bundles in their second cycle have high cold reactivity. This high cold reactivity is present when the reactor is in the cold operating state between outages or is being brought to a hot operating state for the generation of power. Simply stated, if it is required to shut down the reactor when the reactor is in the cold operating state, the fuel bundles reactivity must be such that shut down can occur within acceptable safety margins.

It has been required to add gadolinium to the fuel rods in order to provide a sufficient cold reactivity shut down margin. This gadolinium is a burnable absorber which depresses the cold reactivity of the fuel bundle enabling the cold reactivity shut down margin requirements to be met.

The addition of gadolinium, a burnable neutron absorber, to the fuel of fuel bundles has the desirable effect of controlling reactivity at the beginning of the first cycle or "burn" so that the fuel bundle meets the required cold reactivity shut down margin. The gadolinium is a burnable absorber -- its main neutron absorbing properties are present during the first fuel cycle or burn. By suppressing the reactivity during the first cycle, the overall reactivity of the core -- especially the cold reactivity -- are lowered. Unfortunately, when the gadolinium is utilized for this function, a neutron absorption penalty must be paid in all other cycles of the fuel bundles life time. At the beginning of the fuel bundle life, and when the bundle is initially placed within the reactor during its first "burn", the gadolinium absorbs neutrons, and that absorption is not otherwise required. Further, and during the third and following "burns", most of the gadolinium has been consumed during the first "burn" in the absorption of neutrons. Unfortunately, residual amounts of the gadolinium remain. These residual amounts of gadolinium have an associated penalty; they absorb neutrons over the remaining life of the fuel bundle, even though such absorption is no longer needed.

At the end of the second cycle, the fuel bundle enters into a mid life reactivity where its location can be placed into certain control cell locations adjacent control rod groups utilized for the "shaping" of the power profile interior of the reactor core. This can include the third and fourth cycles of reactor operation.

Finally, and before the fuel bundle is removed at the end of its reactor life, the fuel bundle is often used as a blanket around the periphery of the core. Such fuel bundles serve to shield neutron escape at the periphery of the core to enable the power profile of the remaining portions of the core to be substantially uniform.

Once the foregoing life span of a typical fuel bundle is, understood, it can be seen that there remains a continual need to have fuel designs where the cold reactivity shut down margin is maximized at the beginning of the second cycle or second "burn" of a fuel bundle. Further, because the cold reactivity of the fuel bundle at the beginning of the second "burn" is limiting, improvement of the cold reactivity relative to the hot reactivity -- the so-called "hot to cold reactivity swing" -- is highly desirable.

A fuel bundle with part length rods located adjacent the central water rod or water rods is disclosed which serendipitously realizes improved hot to cold reactivity swing at the beginning of the second cycle of fuel bundle life. The resultant fuel bundle design includes a lower tie plate, and upper tie plate, and a plurality of full length supported fuel rods extending there between. A channel surrounds the upper and lower tie plates and the rods supported therebetween so that liquid moderator entering through the lower tie plate and liquid and vapor moderator exiting through the upper tie plate are confined to a flow path interior of the fuel bundle. The bundle includes central water rods for providing liquid moderator to the upper two phase region of the fuel bundle during all modes of operation. Typical patterns of distribution of the part length rods are disclosed through out the full length rod matrix in which at least some of the part length rods are positioned adjacent the water rods. Some of the patterns include a distribution of the part length rods to avoid large central void volumes in the fuel bundle where the upwardly venting vapor moderator can entrain substantial portions of liquid moderator and degrade critical power performance of the fuel bundle. While other patterns cluster rods around the water rod(s) to create a large volume of moderator in the central portion of the fuel bundle which provides a fuel bundle having the most favorable hot to cold reactivity swing for a given number of part length rods. The fuel bundle therefore becomes a candidate for movement to core locations requiring high cold reactivity shut down margins, these margins typically being realized at the end of the first power outage or cycle of a fuel bundle having a three to five cycle reactor life spans.

### OTHER OBJECTS, FEATURES AND ADVANTAGES

An object of this invention is to provide a fuel bundle that includes the advantages of part length rods in providing superior fuel to moderator ratios, has improved stability, and can be provided with superior cold reactivity margins so as to allow bundles to be optimally loaded to achieve a flat power distribution.

An advantage of the disclosed design is that the use of reactivity controlling gadolinium can be minimized. The associated reactivity penalty present when gadolinium is utilized is held to a minimum.

### BRIEF DESCRIPTION OF THE DRAWINGS

Other objects, features and advantage of this invention will become more apparent after referring to the following specification and attached drawings in which:
Fig. 1 is a perspective view of a boiling water nuclear reactor illustrating in section the core area of the reactor;
Fig. 2 is a perspective view in partial section illustrating a typical fuel bundle; and,
Fig. 3 is a plan view of one quarter of a core of a boiling water nuclear reactor setting forth the various locations that a typical fuel bundle may occupy during its in core reactor life;
Figs. 4 and 5 are pictures of prior art arrays of part length fuel rods within a fuel bundle; and
Figs. 6-13 are various profiles of part length rod distributions in which one or more part length rods are distributed to effect placement of the part length rods adjacent the water rods of the fuel bundle of Fig. 2.

### DESCRIPTION OF THE PREFERRED EMBODIMENT

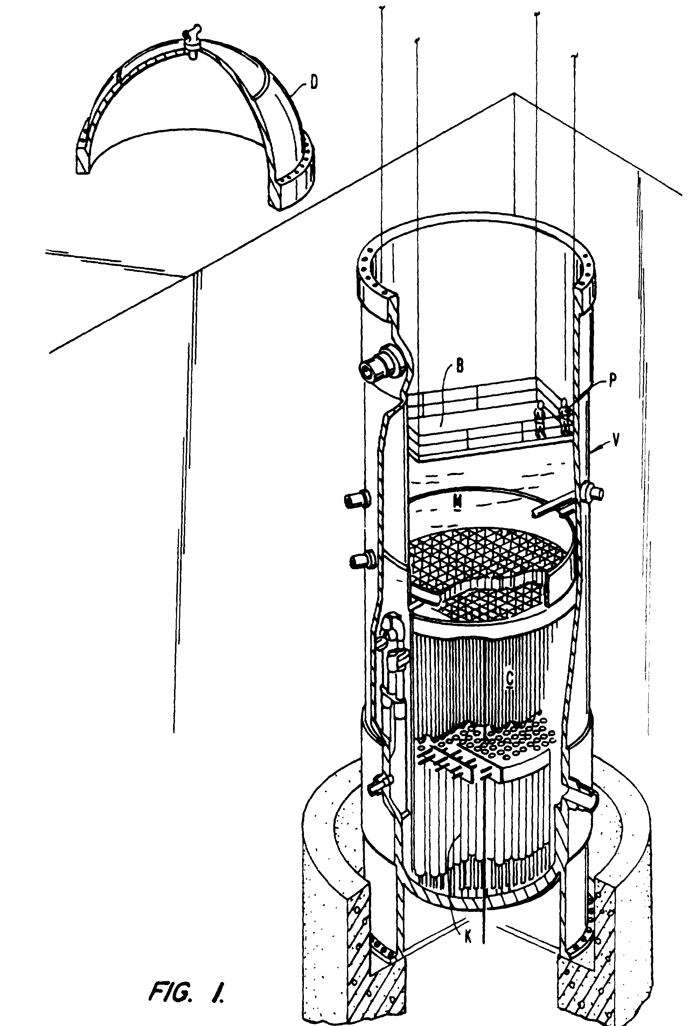

Referring to Fig. 1, a reactor vessel V is shown with its dome D removed. The steam separator and drier (not shown) have been removed and a refueling bridge B has been placed within the reactor. Personnel P are shown moving fuel bundles below the level of moderator M in the core C of the reactor. As is conventional, a plurality of control rods K control the reaction from beneath the reactor vessel.

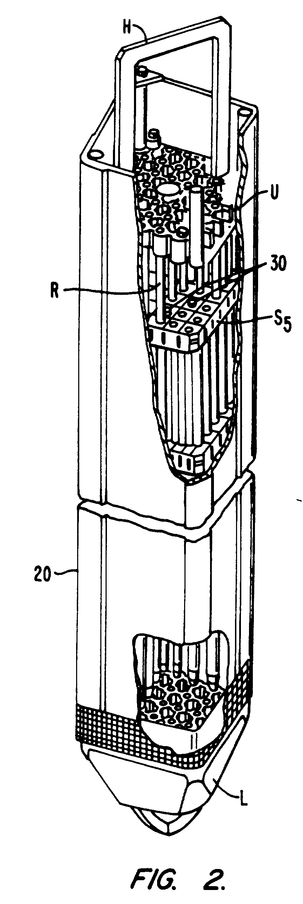

Fig. 2 shows a perspective view of a typical fuel bundle. The fuel bundle includes a lower tie plate L, an upper tie plate U with a plurality of full length fuel rods R extending between the upper and lower tie plate.

Lower tie plate L admits water moderator to the bottom of the fuel bundle. Upper tie plate U permits the discharge of liquid in vapor coolant (water and steam) from the top of the fuel bundle. A channel 20 surrounds the entire fuel bundle. It extends from the lower tie plate L to the upper tie plate U. It confines the flow of water and generated steam interior of the fuel bundle.

The fuel bundle illustrated includes spacers. The spacer S5 illustrated at the top of the fuel bundle has a plurality of part-length fuel rods 30 terminating at the spacer. Part-length fuel rods 30 are typically more than half and normally 5/7 the length of the full-length fuel rods R.

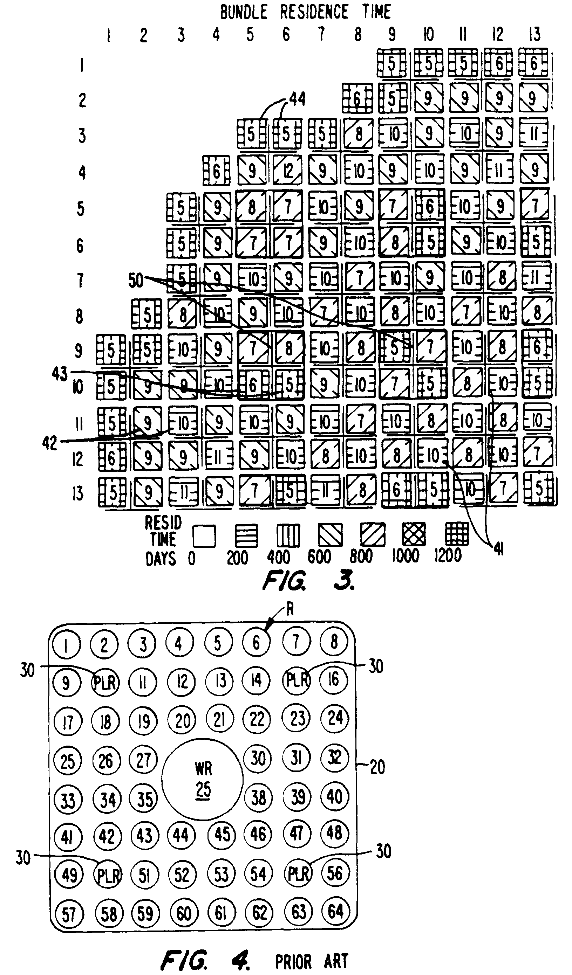

Further discussion of the part-length fuel rods in their array within the fuel bundle will occur with respect to Figs. 3 and 4 which figures illustrate prior art placement of partial length rods within the fuel bundle.

Referring to Fig. 3, a section of the core C of the reactor illustrated in Fig. 1 is shown. The particular section illustrated is a quarter section. The reader will understand that this section must be repeated symmetrically four times to replicate the loading of the entire core C shown in Fig. 1.

Exemplary locations of fuel loading can be set forth. These exemplary loadings include scattered positions 41 wherein fuel bundles are loaded during their first burn. Thereafter, the fuel bundles are moved to the so-called "ring of fire" adjacent but not on the periphery. Exemplary locations are shown at 42. It is this portion of the core during which the fuel bundles are resident during their "second burn". The reader will also understand that the cold reactivity of the fuel bundles placed at this location constitutes one of the limiting factors of fuel bundle design.

Presuming that the fuel bundles have a lifespan of 5 "cycles", the fuel bundles may find placement in certain control cells 43. These control cells have control rods which partially penetrate during operation of the reactor. The control rods are shown at 50. These control rods 50 are utilized for "shaping" the power profile of the reactor. By affecting partial penetration during reactor operation, the overall power profile of the core may be controlled.

Finally, and as fuel bundles enter the last part of their useful life, they are placed in peripheral locations such as 44. These peripheral locations effect a shielding of the neutron flux. That is to say, the fuel bundles prevent the neutron flux interior of the core from readily escaping.

It is not the purpose of this dissertation to summarize nuclear design. It is, however, necessary that some understanding of the placement of the fuel bundles within a reactor core be understood in order to realize the serendipitous advantage of this invention.

Specifically, this invention enables fuel bundles to qualify for placement in the high reactivity locations 42 without having excess amounts of gadolinium placed within the fuel bundles.

Having set forth this much, some of the prior art loadings of part-length rods utilized within the EP-A-336.203 disclosure may be understood.

Referring to Figs. 3 and 4, the prior art concepts of the placement of part-length rods can be summarized.

Referring to Figs. 3 and 4, a fuel bundle including a channel 20 and a large central water rod 25 is illustrated. The bundle is sectioned in the upper two-phase region of the bundle overlying typically the fifth spacer. At this location, the bundle displays conventional fuel rods R in an 8 x 8 matrix with part-length rods 30 in the corner locations of the second row. Part-length rods 30 establish vents overlying the ends of the part-length rods extending up to and through the upper tie plate U. It is to be noted that the part-length rod locations here illustrated are on the so-called "second" row of the matrix. That is to say, they are one row removed from those rods R which border the channel 20.

In the prior art, rods at this location had poor thermal limit performance. It was therefore proposed to substitute rods in this location with partial-length rods the theory being that the removal of the rods in the upper two-phase region of the bundle would have little overall effect on the performance of the fuel bundle.

It has been found that the second row rods adjacent to the part-length rods have reduced thermal limit performance. While the disclosed scheme does reduce the pressure drop in the upper two-phase region of the fuel bundle and add improved stability, the design has proven to be other than optimum.

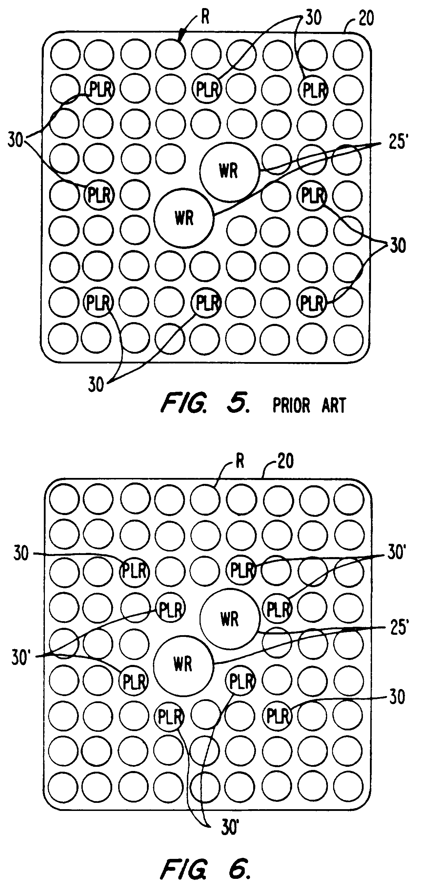

Fig. 5 is a variation of fuel bundle including a 9 x 9 matrix of full-length fuel rods R all encased within a channel 20. The full bundle includes two water rods 25' in the center of the fuel bundle displacing seven fuel rod lattice positions.

Eight partial-length rods 30 are illustrated. These partial-length rods are located in the corner locations of the second row as well as that location medially of the second row on all four fuel bundle sides.

This design of Fig. 5 is subject to the same limitations as the design of Fig. 4. Having set forth the prior art, the fuel designs of this invention may now be discussed.

Referring to Fig. 6, a 9 x 9 lattice of regular rods R surrounded by a channel 20 is illustrated. Part-length rods herein illustrated are arrayed around paired water rods 25'. The part-length rods are located in lattice positions immediately adjacent the water rods. These lattice positions including from the upper left-hand corner the fourth row fourth position, the fourth row seventh position, the sixth row third position, the sixth row fifth position and, finally, the seventh row fourth position. These rods are designated 30'. Conventional part-length rods 30 can be seen in the third row third position and seventh row seventh position.

In the cold state of the reactor, it will be remembered that the volume above the partial-length rod is completely occupied by water. This liquid moderator density coupled with the density of the water rods enables the fuel bundle design of Figs. 6-13 to include relatively large amounts of moderation in the central region of the bundle adjacent the water rod. This configuration is said to be overmoderated. That is, the neutron absorption effect of the water (which decreases reactivity) is greater than the moderating effect (which increases reactivity). Often the words "flux trap" are used to describe this phenomenon. With the presence of full-length rods at this location, the fuel bundle would otherwise tend to be highly reactive. Given the increased moderator fraction in the cold shut-down state of the reactor, the fuel bundle exhibits improved hot to cold reactivity swing over prior art designs, such as those set forth in Figs. 4 and 5.

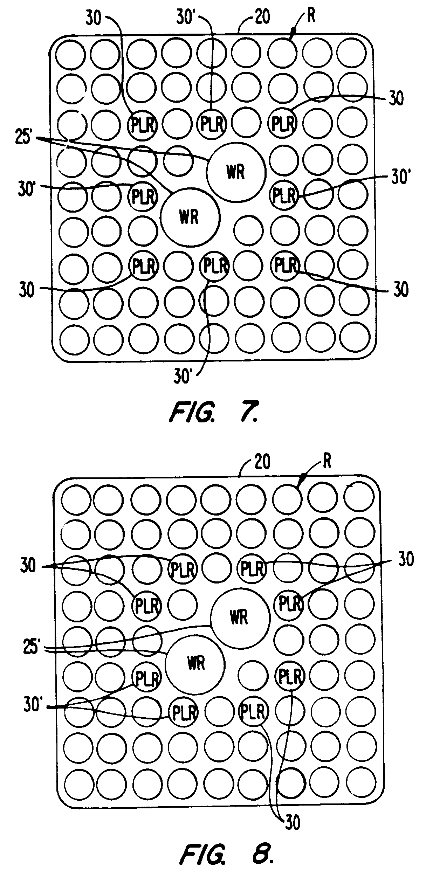

Referring to Fig. 7, it can be seen that this design will admit of variation.

Referring to Fig. 7, conventional part-length rods 30 are illustrated in the third row third position, third row seventh position, seventh row third position and seventh row seventh position.

Part-length rods adjacent the paired central water rods 25' are shown in the third row fifth position, fifth row third position, fifth row seventh position and, finally, the seventh row fifth position.

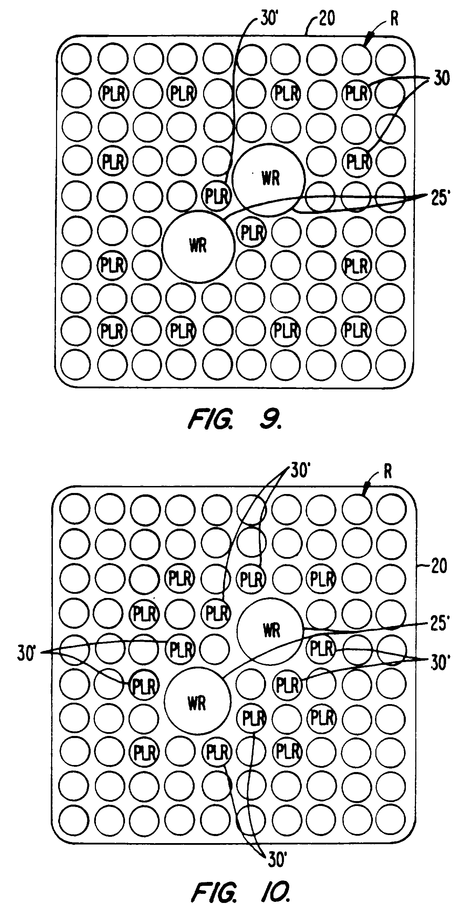

Referring to Fig. 8, conventional part-length rods 30 are illustrated in the third row fourth position, fourth row third position, sixth row seventh position, and seventh row sixth position. Part-length rods 30' adjacent the water rods are illustrated in the third row sixth position, fourth row seventh position, sixth row third position and seventh row fourth position.

Referring to Fig. 9, a 10 x 10 fuel bundle is illustrated having part-length rods 30 distributed in conventional locations in the second row in from channel 20 their matrix positions will not further be set forth except to remark that they are symmetrically distributed one row in from the channel wall 20 at staggered positions adjacent the channel corners.

Two part-length rods 30' prime are positioned between paired water rods 25'.

Referring to Fig. 10, paired water rods 25' include 8 partial-length rods 30' adjacent the water rods at a long diagonally defined positions. By way of example, partial-length rods 30' may be found in the 10 x 10 lattice at the third row sixth position, fourth row fifth position, fifth row fourth position and sixth row third position.

Conventionally placed part-length rods may be found in the third row fourth and eighth position and fourth row third position.

The above description describes one-half of the distribution of part-length rods within the bundle. The remaining part-length rods are distributed symmetrically about an axis including the two water rods.

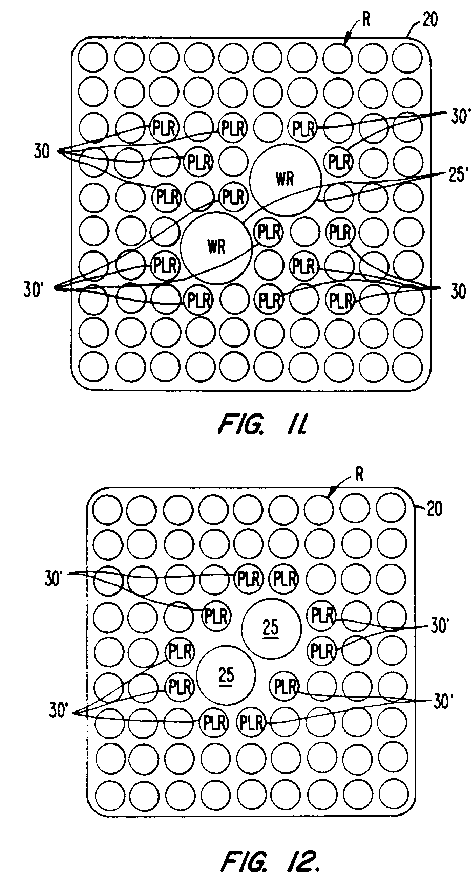

Referring finally to Fig. 11, a channel 20 having full-length rods R includes six partial-length rods 30' distributed about a water rod pair 25'. The distribution about the water rod pair includes the third row seventh position, fourth row eighth position, fifth row fifth position, sixth row sixth position, seventh row third position and eighth row fourth position.

As before, taking an axis through the center of the water rods, it will be seen that the distribution of the remaining conventional part-length rods 30 is symmetrical. Specifically, in the third row third position and third row fifth position, fourth row fourth position and fifth row third position, conventional part-length rods are located on one side of the water rod pair. Part-length rods 30 are on the opposite side of the 10 x 10 array in the same pattern.

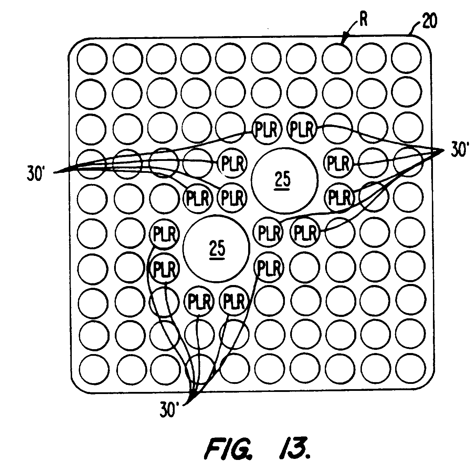

Referring to Figures 12 and 13, the preferred 9 x 9 and 10 x 10 embodiments of the invention, part length rods are placed in positions entirely surrounding the water rods and directly adjacent to one another. This arrangement provides the maximum benefit of reactivity hot-to-cold swing. The amount of hot-to-cold swing benefits will vary with specific enrichment and gadolina loading but will generally be in the range of 0.5% to 1.5%.

Placing PLR directly adjacent one another may have deleterious effects on bundle thermal performance -- especially critical power. Further testing and analysis will identify these effects and lead to the most advantageous design considering the trade-offs between nuclear performance and thermal hydraulic performance.

## Claims

1. A fuel bundle for a boiling water reactor which fuel bundle includes:
a fuel bundle channel (20) having vertically extending walls forming a continuous channel around a fuel bundle volume, said channel being open at the bottom end for engagement to a lower tie plate (L) and open at the upper end for engagement to an upper tie plate (U);
a plurality of fuel rods (R) for placement within said channel (20), each said rod containing fissile material for producing nuclear reaction when in the presence of sufficient moderated neutron flux;
the lower tie plate (L) for supporting said bundle of rods within said channel (20), said lower tie plate (L) joining the bottom of said channel (20) to close the bottom end of said channel, said lower tie plate providing defined apertures for the inflow of water in said channel between said fuel rods for the generation of steam during said nuclear reaction;
said plurality of fuel rods extending from said lower tie plate wherein a single phase region of said water in said bundle is defined to an upward portion of said bundle wherein a two phase region of said water and steam in said bundle is defined during nuclear steam generating reaction in said fuel bundle;
the upper tie plate (U) for supporting upper end of said bundle of rods, said upper tie plate (U) joining the top of said channel to close the top end of said channel, said upper tie plate providing defined apertures for the outflow of water and steam in said channel from the generation of steam during said nuclear reaction;
at least one water rod (25,WR), said water rod having communication to water at said lower tie plate and communicating to the upper two phase region of said fuel bundle said water for maintaining an improved fuel to moderator ratio in the upper two phase region of said fuel bundle;
spacers (S5) intermediate said upper and lower tie plates at preselected elevations along said fuel rods for maintaining said rods in spaced apart locations along the length of said fuel assembly;
wherein a plurality of said fuel rods are partial length fuel rods (30,PLR) extending from said lower tie plate toward said upper tie plate, said partial length rods terminating within the two phase region of said bundle before reaching said upper tie plate;
at least two of said partial length rods (PLR) being separate from one another so as to define in at least two locations in said bundle spaced apart and separate vents commencing at the top of said partial length rods and extending to said upper tie plate, each of said spaced apart vents being immediately adjoined by adjacent full length fuel rods; the fuel bundle being characterized by
at least one of said part length rods (30, PLR) being positioned immediately adjacent to said water rod (25, WR).

2. The invention of claim 1 wherein said fuel bundle includes at least two water rods (25,WR).

3. The invention of any preceding claim, wherein said part length rods (30,PLR) are positioned around said water rods (25,WR).

4. The invention of claim 3 and wherein said part length rods (30,PLR) surround said water rods (25,WR) to form an interval between said water rods and said full length rods.

5. The invention of claim 3 or 4 and wherein said fuel bundle (20) includes a plurality of part-length rods (30,PLR) adjacent each said water rod (25,WR).

6. The invention of any preceding claim and wherein said fuel bundle includes a 9 x 9 matrix.

7. The invention of any preceding claim and wherein said fuel bundle includes a 10 x 10 matrix.

8. The invention of claim 2 and wherein said water rods (25,WR) adjoin one another.

## Patentansprüche

1. Brennelement für einen Siedewasserreaktor, wobei das Brennelement einschließt:
einen Kanal (20) für das Brennelement mit sich vertikal erstreckenden Wandungen, die einen zusammenhängenden Kanal um ein Brennelement-Volumen bilden, wobei der Kanal am Bodenende zum Eingriff in eine untere Gitterplatte (L) offen ist und am oberen Ende zum Eingriff in eine obere Gitterplatte (U) offen ist;
eine Vielzahl von Brennstäben (R) zur Anordnung innerhalb des Kanales (20), wobei jeder Stab spaltbares Material zur Erzeugung einer Kernreaktion enthält, wenn es sich in Gegenwart eines genügend moderierten Neutronenflusses befindet;
die untere Gitterplatte (L) zum Abstützen des Bündels von Stäben innerhalb des Kanales (20), wobei die untere Gitterplatte (L) mit dem Boden des Kanales (20) verbindet, um das Bodenende des Kanales zu schließen, die untere Gitterplatte definierte Öffnungen für das Einströmen von Wasser in den Kanal zwischen den Brennstäben, zur Erzeugung von Dampf während der Kernreaktion, aufweist:
wobei sich die Vielzahl von Brennstäben von der unteren Gitterplatte, wo sich ein einphasiger Wasserbereich des Bündels befindet, bis zu einem oberen Abschnitt des Bündels erstreckt, wo während der dampferzeugenden Kernreaktion im Brennelement ein zweiphasiger Bereich aus Wasser und Dampf vorhanden ist;
die obere Gitterplatte (U) das obere Ende des Bündels von Stäben abstützt und mit dem Oberteil des Kanales verbindet, um das obere Ende des Kanales zu schließen, wobei die obere Gitterplatte definierte Öffnungen für das Auströmen von Wasser und Dampf, der während der Kernreaktion erzeugt worden ist, aus dem Kanal aufweist;
mindestens einen Wasserstab (25,WR), wobei der Wasserstab mit Wasser an der unteren Gitterplatte in Verbindung steht und mit dem oberen Zweiphasenbereich des Brennelementes in Verbindung steht, wobei das Wasser ein verbessertes Verhältnis von Brennstoff zu Moderator im oberen Zweiphasenbereich des Brennelementes aufrecht erhält;
Abstandshaltern (S₅) zwischen der oberen und unteren Gitterplatte in vorausgewählten Höhen entlang den Brennstäben, um die Stäbe in beabstandeten Stellen entlang der Länge des Brennelementes zu halten;
worin eine Vielzahl der Brennstäbe Teillängen-Brennstäbe (30,PLR) sind, die sich von der unteren Gitterplatte in Richtung der oberen Gitterplatte erstrecken, aber inner innerhalb des Zweiphasenbereiches des Bündels enden, bevor sie die obere Gitterplatte erreichen;
mindestens zwei der Teillängenstäbe (PLR) separat voneinander sind, um an mindestens zwei beabstandeten Stellen im Bündel separate Entlüftungen zu bilden, die am Oberteil der Teillängenstäbe beginnen und sich bis zur oberen Gitterplatte erstrekken, wobei jede der beabstandeten Entlüftungsöffnungen unmittelbar benachbart Brennstäben voller Länge liegt;
wobei das Brennelement dadurch gekennzeichnet ist, daß
mindestens einer der Teillängenstäbe (30,PLR) unmittelbar benachbart dem Wasserstab (25,WR) angeordnet ist.

2. Brennelement nach Anspruch 1, das mindestens zwei Wasserstäbe (25,WR) einschließt.

3. Brennelement nach einem vorhergehenden Anspruch, bei dem die Teillängenstäbe (30,PLR) um die Wasserstäbe (25,WR) herum angeordnet sind.

4. Brennelement nach Anspruch 3, worin die Teillängenstäbe (30,PLR) die Wasserrohre (25,WR) zur Bildung eines Abstandes zwischen den Wasserstäben und den Stäben voller Länge umgeben.

5. Brennelement nach Anspruch 3 oder 4, das eine Vielzahl von Teillängenstäben (30,PLR) benachbart jedem Wasserstab (25,WR) einschließt.

6. Brennelement nach einem vorhergehenden Anspruch, das eine 9 x 9-Matrix einschließt.

7. Brennelement nach einem vorhergehenden Anspruch, das eine 10 x 10-Matrix einschließt.

8. Brennelement nach Anspruch 2, worin die Wasserstäbe (25,WR) einander benachbart sind.

## Revendications

1. Assemblage combustible pour un réacteur à eau bouillante, cet assemblage combustible comprenant:
un boîtier-canal (20) pour grappe combustible comportant des parois s'étendant verticalement et formant un canal continu autour du volume de la grappe combustible, ledit canal étant ouvert à l'extrémité inférieure en vue d'être engagé avec une plaque-support inférieure (L) et ouvert à l'extrémité supérieure en vue d'un engagement avec une plaque-support supérieure (U);
une pluralité de crayons combustibles (R) destinés à être placés à l'intérieur dudit canal (20), chaque crayon précité contenant un matériau fissile pour produire une réaction nucléaire quand il est en présence d'un flux modéré suffisant de neutrons;
la plaque-support inférieure (L) destinée à supporter ladite grappe de crayons à l'intérieur dudit canal (20), ladite plaque-support inférieure (L) unissant la base dudit canal pour fermer l'extrémité inférieure dudit canal, ladite plaque-support inférieure assurant la présence d'ouvertures définies pour l'entrée de l'eau dans ledit canal entre lesdits crayons de combustible en vue de la génération de vapeur pendant ladite réaction nucléaire;
ladite pluralité de crayons combustibles s'étendant depuis ladite plaque-support inférieure, une région à une seule phase de ladite eau dans ladite grappe étant définie jusqu'à une partie amont de ladite grappe et une région à deux phases de ladite eau et de ladite vapeur dans ladite grappe étant définie pendant la réaction nucléaire générant de la vapeur;
la plaque-support supérieure (U) destinée à supporter l'extrémité supérieure de ladite grappe de crayons, ladite plaque-support supérieure (U) unissant le sommet dudit canal pour fermer l'extrémité supérieure dudit canal, ladite plaque-support supérieure assurant la présence d'ouvertures définies pour l'écoulement de sortie de l'eau et de la vapeur dans ledit canal à partir de la génération de vapeur d'eau pendant ladite réaction nucléaire;
au moins un crayon rempli d'eau (25, WR), ledit crayon rempli d'eau communiquant avec l'eau au niveau de ladite plaque-support inférieure et faisant communiquer avec la région supérieure à deux phases de ladite grappe combustible ladite eau pour maintenir un meilleur rapport combustible/modérateur dans la région à deux phases dudit assemblage combustible;
des éléments d'espacement (S) entre lesdites plaques-supports supérieure et inférieure à des hauteurs préalablement sélectionnées le long desdits crayons de combustible pour maintenir lesdits crayons à des endroits mutuellement espacés le long dudit assemblage combustible;
ledit assemblage combustible étant caractérisé en ce que:
une pluralité desdits crayons de combustible sont des crayons de combustible (30, PLR) de longueur partielle s'étendant depuis ladite plaque-support inférieure en direction de ladite plaque-support supérieure, lesdits crayons de longueur partielle se terminant dans la région à deux phases de ladite grappe avant d'atteindre ladite plaque-support supérieure;
au moins deux desdits crayons (PLR) de longueur partielle étant séparés l'un de l'autre de manière à définir au moins dans ladite grappe deux endroits espacés l'un de l'autre et des orifices séparés de mise à l'air libre commençant au sommet desdits crayons de longueur partielle et s'étendant jusqu'à ladite plaque-support supérieure, chacun desdits orifices espacés l'un de l'autre étant jouxté immédiatement par des crayons de combustible adjacents de longueur totale, l'assemblage combustible étant caractérisé en ce que:
au moins un desdits crayons (30, PLR) de longueur partielle est positionné au voisinage immédiat d'un crayon rempli d'eau (25,WR).

2. Assemblage combustible selon la revendication 1, dans lequel ladite grappe combustible comprend au moins deux crayons remplis d'eau (25, WR)

3. Assemblage combustible selon l'une quelconque des revendications précédentes, dans lequel lesdits crayons de longueur partielle (30, PLR) sont positionnés autour desdits crayons remplis d'eau (25, WR).

4. Assemblage combustible selon la revendication 3, dans lequel lesdits crayons (30,PLR) de longueur partielle entourent lesdits crayons remplis d'eau (25,WR) de manière qu'il existe un intervalle entre lesdits crayons remplis d'eau et lesdits crayons de longueur totale.

5. Assemblage combustible selon la revendication 3 ou 4 et dans lequel ladite grappe (20) de crayons comprend une pluralité de crayons (30, PLR) de longueur partielle adjacents à chacun desdits crayons remplis d'eau (25, WR).

6. Assemblage combustible selon l'une quelconque des revendications précédentes et dans lequel ladite grappe de crayons combustibles comprend une matrice 9 x 9 de crayons.

7. Assemblage selon l'une quelconque des revendications précédentes et dans lequel ladite grappe de crayons combustibles comprend une matrice 10 x 10 de crayons.

8. Assemblage combustible selon la revendication 2 et dans lequel lesdits crayons remplis d'eau (25,WR) sont mutuellement adjacents.
